# EUROPÄISCHE PATENTSCHRIFT

(11) **EP 2 175 451 B1**
(45) Veröffentlichungstag und Bekanntmachung des Hinweises auf die Patenterteilung: **19.10.2011**
(21) Anmeldenummer: 09168036.3
(22) Anmeldetag: 18.08.2009
(51) Int. Cl.: G11B 27/00, G11B 27/10, G06F 13/00, G06F 17/00

(54) **Medienwiedergabegerät**
Media dispensing device
Appareil de retransmission de médias

(30) Priorität: 10.10.2008 DE 102008042736
(43) Veröffentlichungstag der Anmeldung: 14.04.2010
(73) Patentinhaber: Robert Bosch GmbH, 70442 Stuttgart (DE)
(72) Erfinder: Strauch, Bernd, 31141 Hildesheim (DE)

(56) Entgegenhaltungen:
- DE-A1-102004 013 523
- US-A- 5 457 669
- US-A1- 2007 198 111
- US-B1- 6 700 839

## Beschreibung

### TECHNISCHES GEBIET

Die Erfindung betrifft ein Medienwiedergabegerät zur Wiedergabe einer digitalen Mediendatei mit einem Bedienelement für schnellen Vorlauf, wobei der schnelle Vorlauf für eine Zeitspanne einer Betätigung des Bedienelements aktiviert ist, sowie ein Verfahren zum Betätigen eines Medienwiedergabegeräts.

### STAND DER TECHNIK

Digitale Medienwiedergabegeräte sind in den verschiedensten Ausführungsformen bekannt, beispielsweise als MP3-Abspielgerät, als CD-Spieler oder als DVD-Abspielgerät. Gemeinsam ist diesen Medienwiedergabegeräten, dass Audio- und/oder Videosignale in digitaler Form entweder auf einem austauschbaren Speichermedium wie einer CD-Rom oder einer DVD hinterlegt sind oder in einem Speicher im Medienwiedergabegerät selbst, wie in einem MP3-Player.

Zum schnellen Wiederauffinden beispielsweise eines bestimmten Musikstücks, das als MP3-Datei gespeichert ist, ist es bekannt, dass verschiedene Musikstücke karteiartig sortiert werden können, um beispielsweise mehrere Lieder nach Album, Titel oder nach Interpret sortiert identifizieren und auffinden zu können.

Innerhalb einer solchen Mediendatei, beispielsweise ein Hörbuch im MP3-Format oder ein Spielfilm als MPEG-Video, sind jedoch häufig keine einzelnen Kapitel voneinander abgetrennt, so dass das Auffinden einer bestimmten Stelle innerhalb eines Musikstücks oder eines Spielfilms sich relativ schwierig gestalten kann. Zum Suchen und Auffinden gewünschter Stellen innerhalb einer Mediendatei ist es bekannt, dass das digitale Medienwiedergabegerät zumindest mit einem Bedienelement für schnellen Vorlauf ausgestattet ist. Wird das Bedienelement, üblicherweise eine Drucktaste, von einem Nutzer betätigt, so wird für die Zeitspanne, während der das Bedienelement betätigt oder gedrückt ist der schnelle Vorlauf aktiviert. Es wird quasi innerhalb der Mediendatei schnell vorgespult entsprechend den früheren Kassettenabspielgeräten. Dieser schnelle Vorlauf verfügt entweder über eine fest eingestellte Geschwindigkeit, beispielsweise die neunfache normale Abspielgeschwindigkeit, oder die Vorlaufgeschwindigkeit erhöht sich schrittweise, so dass je länger das Betätigungselement betätigt bleibt, die Vorlaufgeschwindigkeit sich erhöht. Besonders bei MP3-Playern oder ähnlichen Audiowiedergabegeräten ist es bekannt, dass während des schnellen Vorlaufs ein Musikstück sozusagen gerafft wiedergegeben wird, wobei jedoch insbesondere bei zunehmender Vorlaufgeschwindigkeit eine Identifizierung einer bestimmten Stelle innerhalb der Mediendatei zunehmend erschwert wird.

Aus der DE 10 2004 013 523 A1 ist eine Steuereinrichtung zum Ansteuern einer ausgewählten oder auswählbaren Position auf einem Aufzeichnungsträger einer Audio- und/oder Video-Wiedergabevorrichtung bekannt. Die Steuereinrichtung umfasst ein erstes Bedienungselement dessen Betätigung eine Änderung der Position entlang einer ersten Richtung um eine bestimmte Sprungweite bewirkt, und ein zweites Bedienungselement, dessen Betätigung eine Änderung der Position entlang einer zweiten Richtung, die der ersten Richtung entgegengesetzt ist, um eine weitere bestimmten Sprungweite bewirkt. Die Sprungweite ist für jede Betätigung des ersten Bedienungselementes und des zweiten Bedienungselements nach einem vorbestimmten Schema berechnet oder berechenbar. Weiterhin wird ein Verfahren zum Ansteuern einer ausgewählten oder auswählbaren Position auf einem Aufzeichnungsträger einer Audio- und/oder Video-Wiedergabevorrichtung vorgeschlagen.

Ausgehend von diesem Stand der Technik liegt der Erfindung die Aufgabe zugrunde, ein digitales Medienwiedergabegerät der Eingangs genannten Art zu schaffen, bei dem das Auffinden einer gewünschten Stelle innerhalb einer Mediendatei vereinfacht ist.

Diese Aufgabe wird durch die in den Ansprüchen 1 oder 4 angegebenen Merkmale gelöst.

### DARSTELLUNG DER ERFINDUNG: AUFGABE, LÖSUNG, VORTEILE

Der Kerngedanke der Erfindung besteht darin, dass ein digitales Medien-wiedergabegerät in an sich bekannter Weise mit einem Bedienelement für einen schnellen Vorlauf ausgestattet ist, um innerhalb der Mediendatei sozusagen vorzuspulen. Zusätzlich ist das digitale Medienwiedergabegerät aber derart ausgebildet, dass innerhalb einer Wartezeit, nach Beendigung der Betätigung des Bedienelements, eine erneute Betätigung des Bedienelements dazu führt, dass innerhalb der Mediendatei ein Sprung im zeitlichen Ablauf nach vorne ausgeführt wird und die Wiedergabe zum Zeitpunkt der Zielzeit dieses Sprunges wieder aufgenommen wird. Die Zeitdauer des Sprungs ist dabei durch die Dauer der vorhergehenden Betätigung des Bedienelements vorgegeben. Wird das Bedienelement beispielsweise solange betätigt, bis innerhalb der Mediendatei ein Zeitraum von 30 Sekunden verstrichen ist, bei neunfacher Vorspulgeschwindigkeit wäre dies eine Betätigungszeit von 3 1/3 Sekunden, so führt das erneute Betätigen des Bedienelements innerhalb der Wartezeit zu einem unmittelbaren Sprung erneut um 30 Sekunden innerhalb des zeitlichen Ablaufs der Mediendatei nach vorne. Es versteht sich, dass der Vorlauf, die normale Widergabe und ein Sprung über ein vorzugsweise digitales Zählwerk anzeigbar sind.

Beispielsweise beträgt die Wartezeit fünf Sekunden, so dass ein Nutzer ausreichend Zeit hat am einmal angesprungenen Zeitpunkt sich kurz beispielsweise ein Musikstück anzuhören und innerhalb der fünf Sekunden zu entscheiden, ob er hier weiter hören möchte oder ob er durch erneutes Betätigen des Bedienelements erneut beispielsweise um 30 Sekunden nach vorne springen möchte.

Hierzu wird das Bedienelement einmalig oder nur kurz betätigt, um den Sprung innerhalb der Mediendatei auszulösen. Wird innerhalb der Wartezeit das Bedienelement lange betätigt bzw. eine Taste für schnellen Vorlauf lange gedrückt, so kann der normale schnelle Vorlauf aktiviert werden. Beispielsweise kann sich die normale schnelle Vorlauffunktion dann aktivieren, wenn das Bedienelement länger als eine halbe Sekunde betätigt bleibt. Es versteht sich, dass bei einem Sprung, der über das zeitliche Ende der aktuellen Mediendatei hinausreichen würde, lediglich dieser Endpunkt angesprungen werden kann, um beispielsweise den Anfang des nächsten Kapitels eines Hörbuchs hören zu können.

Im Rahmen der Erfindung sind sämtliche digitalen Medienwiedergabegeräte mit umfasst, dies sind insbesondere MP3-Abspielgeräte, Video-Wiedergabegeräte, insbesondere für MPEG-Videos, DVD- oder CD-Wiedergabegeräte, wobei sämtliche Medienwiedergabegeräte auch transportabel ausgelegt sein können.

Vorteilhafte Ausgestaltungen der Erfindung sind in den Unteransprüchen gekennzeichnet.

Gemäß den Ansprüchen 2 und 5 kann die Funktionalität, die im Vorhergehenden für den schnellen Vorlauf beschrieben worden ist, auch zusätzlich oder alternativ für einen schnellen Rücklauf ausgebildet sein, wobei für den schnellen Rücklauf üblicherweise ein eigenes Bedienelement am digitalen Medien-Wiedergabegerät wie eine Drucktaste vorgesehen ist. Sollte über den Anfang der Mediendatei hinaus zurückgesprungen werden, kann das Medienwiedergabegerät derart ausgebildet sein, dass lediglich zum Anfang der Mediendatei zurückgesprungen wird.

Zur Erhöhung des Nutzungskomforts ist in den Ansprüchen 3 und 6 gekennzeichnet, dass die Wartezeit, innerhalb derer eine erneute kurze Betätigung des Bedienelements zu einem zeitlichen Sprung innerhalb der Mediendatei führt, vom Nutzer einstellbar ist. Entweder ist die Wartezeit werksseitig fest mit beispielsweise fünf Sekunden vorgegeben oder der Nutzer kann eine von ihm bevorzugte Wartezeit wie zum Beispiel zehn Sekunden vorgeben.

### KURZBESCHREIBUNG DER ZEICHNUNG

Eine Ausführungsform der Erfindung wird nachstehend anhand der Zeichnung näher erläutert. Es zeigt rein schematisch:

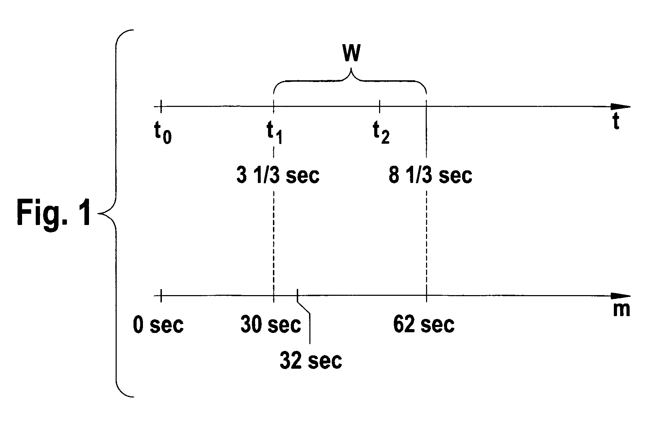

- Fig. 1: den zeitlichen Verlauf einer Betätigung des Bedienelements.

### BESTER WEG ZUR AUSFÜHRUNG DER ERFINDUNG

Aus der schematischen Darstellung in Figur 1 ist ein Zeitstrahl t ersichtlich. Beispielsweise zum Zeitpunkt t₀ wird ein Bedienelement zur Aktivierung des schnellen Vorlaufs innerhalb einer digitalen Mediendatei an einem digitalen Medienwiedergabegerät erstmalig für einen längeren Zeitraum betätigt. Zum Zeitpunkt t₁, beispielsweise 3 1/3 Sekunden, wird die Betätigung beendet. Das heißt, dass eine Taste losgelassen wird. An diesen Zeitpunkt t₁ schließt sich eine Wartezeit W von beispielsweise fünf Sekunden an. Wird innerhalb dieses Zeitraums also von 3 1/3 Sekunden bis 8 1/3 Sekunden das Bedienelement z. B. zum Zeitpunkt t₂ erneut kurz betätigt, führt dies dazu, dass innerhalb der Mediendatei ein Sprung um den soeben vorgespulten Zeitraum, hier dreißig Sekunden ausgeführt wird.

Dies ist aus dem zweiten Zeitstrahl m, der den zeitlichen Ablauf innerhalb der Mediendatei wiedergibt, ersichtlich. Das erstmalige Betätigen zum Zeitpunkt t₀ bis zum Zeitpunkt t₁ führt dazu, dass innerhalb der Mediendatei beispielsweise vom Zählerstand 0 Sekunden bis zum Zählerstand 30 Sekunden schnell vorgespult worden ist. Anschließend kann die Wiedergabe mit Normalgeschwindigkeit beispielsweise eines Musikstücks erfolgen. Wird z.B. zwei Sekunden nach Loslassen des entsprechenden Bedienelements dieses erneut kurz betätigt, so wird automatisch ein Zeitsprung innerhalb der Mediendatei ausgeführt, und zwar genau um diejenige Zeitspanne, um die vorhergehend durch längeres Betätigen des Bedienelements vorgespult worden ist, hier also erneut um 30 Sekunden, so dass nun die erneute Wiedergabe beispielsweise bei 62 Sekunden erfolgt.

Es versteht sich, dass eine entsprechende Funktionalität auch für einen schnellen Rücklauf ausgeführt werden kann. Wird innerhalb der Wartezeit W das Bedienelement länger betätigt, beispielsweise länger als eine halbe Sekunde, so wird lediglich ein normaler schneller Vor- oder Rücklauf ausgeführt.

## Patentansprüche

1. Medienwiedergabegerät zur Wiedergabe einer digitalen Mediendatei mit einem Bedienelement für schnellen Vorlauf, wobei der schnelle Vorlauf für eine Zeitspanne einer Betätigung des Bedienelements aktiviert ist, **dadurch gekennzeichnet, dass** nach der Betätigung innerhalb einer Wartezeit (W) durch eine erneute Betätigung des Bedienelements ein Vorwärtssprung um die soeben vorgelaufene Zeitspanne in der Mediendatei auslösbar ist, wobei die Zeitspanne dem soeben vorgespulten Zeitraum entspricht.

2. Medienwiedergabegerät nach Anspruch 1, **dadurch gekennzeichnet, dass** bei einem schnellen Rücklauf ein gleichartiger Sprung zurück in der Mediendatei auslösbar ist.

3. Medienwiedergabegerät nach Anspruch 1 oder 2, **dadurch gekennzeichnet, dass** eine Länge der Wartezeit (W) einstellbar ist.

4. Verfahren zum Betätigen eines Medienwiedergabegeräts zur Wiedergabe einer digitalen Mediendatei, wobei das Medienwiedergabegerät mit einem Bedienelement für schnellen Vorlauf ausgestattet ist und der schnelle Vorlauf für eine Zeitspanne einer Betätigung des Bedienelements aktiviert wird, **dadurch gekennzeichnet, dass** nach der Betätigung innerhalb einer Wartezeit (W) durch eine erneute Betätigung ein Vorwärtssprung um die soeben vorgelaufene Zeitspanne in der Mediendatei ausgeführt wird, wobei die Zeitspanne dem soeben vorgespulten Zeitraum entspricht.

5. Verfahren nach Anspruch 4, **dadurch gekennzeichnet, dass** bei einem schnellen Rücklauf ein gleichartiger Sprung zurück in der Mediendatei ausgelöst wird.

6. Verfahren nach Anspruch 4 oder 5, **dadurch gekennzeichnet, dass** eine Länge der Wartezeit (W) eingestellt wird.

## Claims

1. Media reproduction appliance for reproducing a digital media file having an operator control element for fast forwarding, wherein the fast forwarding is activated for a period of time in which the operator control element is operated, **characterized in that** when said operator control element has been operated it is possible to operate the operator control element again within a waiting time (W) in order to initiate a forward skip in the media file by the period of time in which fast forwarding has just taken place, wherein the period of time corresponds to the period which has just been fast-forwarded.

2. Media reproduction appliance according to Claim 1, **characterized in that** fast rewinding involves a similar skip back in the media file being able to be initiated.

3. Media reproduction appliance according to Claim 1 or 2, **characterized in that** a length for the waiting time (W) can be set.

4. Method for the operation of a media reproduction appliance for reproducing a digital media file, wherein the media reproduction appliance is equipped with an operator control element for fast forwarding and the fast forwarding is activated for a period of time in which the operator control element is operated, **characterized in that** when said operator control element has been operated it is operator again within a waiting time (W) in order to perform a forward skip in the media file by the period of time in which fast forwarding has just taken place, wherein the period of time corresponds to the period of time which has just been fast-forwarded.

5. Method according to Claim 4, **characterized in that** fast rewinding involves a similar skip back in the media file being initiated.

6. Method according to Claim 4 or 5, **characterized in that** a length for the waiting time (W) is set.

## Revendications

1. Appareil de retransmission de médias pour la retransmission d'un fichier multimédia numérique avec un élément de commande pour l'avance rapide, l'avance rapide étant activée pendant la durée d'actionnement de l'élément de commande, **caractérisé en ce qu'**en présence d'un actionnement réitéré de l'élément de commande après le premier actionnement, pendant une période de latence (W), on observe un saut vers l'avant de la même durée que celle déjà parcourue vers l'avant dans le fichier multimédia, la durée correspondant à l'intervalle de temps d'avancement déjà réalisé.

2. Appareil de retransmission de médias selon la revendication 1, **caractérisé en ce que** la marche arrière rapide permet de réaliser un saut identique en arrière dans le fichier multimédia.

3. Appareil de retransmission de médias selon la revendication 1 ou 2, **caractérisé en ce que** la longueur de la période de latence (W) peut être réglée.

4. Procédé d'actionnement d'un appareil de retransmission de médias pour la retransmission d'un fichier multimédia numérique, l'appareil de retransmission de médias étant équipé d'un élément de commande pour l'avance rapide et l'avance rapide étant activée pendant la durée d'actionnement de l'élément de commande, **caractérisé en ce qu'**en présence d'un actionnement réitéré de l'élément de commande après le premier actionnement, pendant une période de latence (W), on observe un saut vers l'avant de la même durée que celle déjà parcourue vers l'avant dans le fichier multimédia, la durée correspondant à l'intervalle de temps d'avancement déjà réalisé.

5. Procédé selon la revendication 4, **caractérisé en ce que** la marche arrière rapide permet de réaliser un saut identique en arrière dans le fichier multimédia.

6. Procédé selon la revendication 4 ou 5, **caractérisé en ce que** la longueur de la période de latence (W) peut être réglée.
